Europäisches Patentamt

European Patent Office

Office européen des brevets

(11) Veröffentlichungsnummer: **0 394 862**
**A2**

## (12) EUROPÄISCHE PATENTANMELDUNG

(21) Anmeldenummer: **90107507.7**

(51) Int. Cl.5: **H04N 5/445**

(22) Anmeldetag: **20.04.90**

(30) Priorität: **26.04.89 DE 3913726**

(43) Veröffentlichungstag der Anmeldung:
**31.10.90 Patentblatt 90/44**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Hilpert, Werner, Grundig E.M.V.**
**Max Grundig, holländ. Stiftung & Co KG**
**Kurgartenstrasse 37, D-8510 Fürth/Bay(DE)**

(54) **Videotextdecoder mit Zwischenspeicher für Videotextseitennummern und Videotextseiten.**

(57) Um eine einfache Nutzung von Videotext zu ermöglichen, wurde das TOP (Table of Pages) - Verfahren entwickelt, bei dem die einzelnen Videotextseiten nach Themenbereichen geordnet sind. In einer Übersichtsseite sind alle im TOP-Dienst enthaltenen Blöcke mit ihren Gruppen aufgelistet. Mit einer speziellen Videotextdecoder-Fernbedienung markiert der Benutzer nur die gewünschte Gruppe auf der Übersichtsseite und der Videotextdecoder wählt dann die gewünschten Videotextseiten direkt an.

Um die Auswahl bestimmter Videotextseiten aus verschiedenen Blöcken und/oder Gruppen für den Benutzer noch weiter zu vereinfachen, markiert der Benutzer die in der Übersichtsseite enthaltenen Blöcke und/oder Gruppen und durch eine im Videotextdecoder angeordnete Steuerschaltung werden automatisch die entsprechenden Seitennummern in einen Seitennummernspeicher eingelesen. Nach dem Auslesen der gewünschten Videotextseite wird die zugehörige Seitennummer im Videotextseitennummernspeicher gelöscht oder durch eine im Wiederholungszyklus nachfolgende Seitennummer überschrieben.

Der erfindungsgemäße Videotextdecoder ermöglicht dem Benutzer eine einfache, sichere und schnelle Anwahl von Videotextseiten, auch wenn diese nach Themenbereichen geordnet sind.

EP 0 394 862 A2

## VIDEOTEXTDECODER MIT ZWISCHENSPEICHER FÜR VIDEOTEXTSEITENNUMMERN UND VIDEOTEXTSEI-TEN

Die Erfindung betrifft einen Videotextdecoder mit Zwischenspeicher für Videotextseitennummern und Videotextseiten gemäß dem Oberbegriff des Patentanspruchs 1.

In der Bundesrepublik Deutschland kann mit dem Fernsehempfangsgerät sowohl das Fernsehprogramm als auch das sogenannte Videotext-Programm oder Fernsehtext-Programm, welches in bestimmten Datenzeilen innerhalb der Vertikalaustastlücke des Fernsehsignals neben der laufenden Videoinformation übertragen wird, empfangen werden. Die Datenblöcke des Videotext-Programms werden empfängerseitig mit Hilfe eines Videotextdecoders in auf dem Bildschirm des Fernsehempfängers darstellbaren Tafeln umgewandelt. Der Zuschauer kann auf mehreren hundert Tafeln das Neueste aus Politik, Wirtschaft, Kultur und Sport abrufen. Fast rund um die Uhr aktualisiert eine eigene Redaktion laufend das Videotext-Programm. Dabei werden beispielsweise zum Wochenende aktuelle Verkehrsmeldungen und Stauprognosen, aktuelle Sportergebnisse, das Wetter oder das aktuelle Programmangebot in den Meldungen berücksichtigt.

Darüber hinaus ist es möglich, Informationen für Gehörlose zu senden und die verschiedenen Fernsehsendungen zu untertiteln.

Um dem Zuschauer eine einfache Nutzung dieses breiten Angebots an Informationen zu ermöglichen, wurde von den Fernsehanstalten das TOP (Table of Pages) -Verfahren entwickelt, bei dem die einzelnen Videotextseiten nach Themenbereichen geordnet sind. In einer Hauptübersichtsseite sind alle Übersichtsseiten, d.h. Blöcke, und ggf. die zugehörigen Gruppen aufgelistet, wie dies beispielsweise in der Zeitschrift "Funkschau", Heft 3, 1988, Seiten 46 - 49 beschrieben ist.

Mit einer speziellen Videotextdecoder-Fernbedienung markiert der Benutzer nur die gewünschte Gruppe in der Hauptübersichtsseite oder Übersichtsseite und der Videotextdecoder wählt dann die gewünschte Videotextseite direkt an (vgl. o.g. Zeitschrift, Seite 48, linke Spalte). Hierzu wird eine gesonderte, für den Zuschauer nicht sichtbare Videotextseite sendeseitig erzeugt, welche zyklisch gesendet wird und in welcher die Videotextseitennummern aller im Zyklus vorhandenen Videotextseiten in Tabellenform aufgelistet sind. Neben der bereits erwähnten Hauptübersichtsseite ist es bei TOP möglich, auch eine spezielle Übersichtsseite der am meisten gefragten Videotextseiten zu senden, wobei zur Auswahl ebenfalls der Benutzer nur die gewünschte Videotextseite markieren muß.

Um eine Bedienerführung des Zuschauers zu ermöglichen, wird vom Videotextdecoder am unteren Rand des Bildschirms und in einer Überschriftenzeile eine Kommentarzeile aufgebaut, die dem Benutzer die Bezeichnung des gerade gewählten Blocks bzw. Gruppe und die Bezeichnung der nächsten Gruppe dieses Blocks bzw. die Bezeichnung des nächsten Blocks anzeigt. Mit der Videotextdecoder-Fernbedienung kann der Benutzer innerhalb der Gruppe blättern und die nächste Gruppe oder den nächsten Block aufrufen. Durch die Kommentarzeile wird zwar dem Benutzer die Orientierung erleichtert, wenn der Benutzer jedoch nicht die nächste sondern die übernächste Gruppe anwählen will, muß er entweder direkt die entsprechende Videotextseitennummer eingeben, oder falls ihm diese Videotextseitennummer nicht bekannt ist, wieder in die Hauptübersichtsseite zurückkehren.

Schaltungstechnische Einzelheiten des Videotextdecoders sind beispielsweise in der EP-A2-0 264 565 oder in der DE-PS 36 34 757 beschrieben. Der Videotextdecoder enthält unter anderem eine Videotextseitennummern-Auskopplungsschaltung und einen Videotextseitennummern-Zwischenspeicher, in welchem die Videotextseitennummern aller im Wiederholungszyklus vorhandener Videotextseiten zwischengespeichert werden. Wählt der Benutzer eine bestimmte Videotextseite aus, so wird mittels einer Steuerung (Steuerschaltung) diese Videotextseitennummer mit den gespeicherten Videotextseitennummern verglichen und bei

Übereinstimmung wird die gewünschte Videotextseite sowie ggf. die zugehörigen Videotext-Folgeseiten in einem Videotextseiten-Zwischenspeicher eingelesen. Nach erfolgtem Einlesen in den Videotextseiten-Zwischenspeicher kann der Benutzer diese Videotextseite aufrufen, welche dann als Tafel auf dem Bildschirm des Fernsehempfängers dargestellt wird.

Während bei den vorgenannten Videotextdecodern die Videotextseitennummern aller im Wiederholungszyklus vorhandenen Videotextseiten zwischengespeichert werden, kann beim mikrocomputergesteuerten Videotextdecoder gemäß EP-A2-0 253 110 der Benutzer selbst, durch Eingabe von Befehlen, vom Sender unabhängige Übersichtsseiten erstellen. Bei der Vorprogrammierung der Übersichtsseiten legt der Benutzer mit der Eingabe der Videotextseitennummern fest, welche Videotextseite aus dem Videotextangebot in welchem der Videotextseiten-Zwischenspeicher abgelegt werden soll. Die Übersichtsseite, welche aus einer Matrix mit den Blocknummern in den Spalten und den Speichernummern in den Reihen besteht, ist in einem zusätzlichen Speicher enthalten und kann durch den Benutzer abgerufen und z.B. auf dem Bildschirm eines Fernsehempfängers dargestellt werden. Durch die Vorauswahl und Zusammenfassung bestimmter Videotextseiten zu Blöcken unter einer Blocknummer, werden einerseits Eingabefehler weitgehend vermieden, da abgesehen von der Ersteingabe der Benutzer nicht mehr eine Vielzahl von z.B. dreistelligen Videotextseitennummern eingeben muß, und andererseits kann der Benutzer die einzelnen Videotextseiten nach Themenbereichen (ähnlich zu TOP) ordnen. Bei der Eingabe einer Blocknummer werden dann, gesteuert durch den Videotextdecoder, automatisch in jedem der Videotextseiten-Zwischenspeicher die der Videotextseitennummer entsprechende Videotextseite eingelesen, so daß dem Benutzer das Aufrufen dieser Videotextseiten und das Blättern in diesen Videotextseiten ermöglicht wird.

Die Vorprogrammierung der Übersichtsseite durch den Benutzer selbst kann dann zu Problemen führen, wenn die von ihm im voraus gewählte Videotextseite zur Zeit überhaupt nicht im Videotext-Programm enthalten ist oder wenn bei der Auswahl Mehrfachseiten mit erfaßt werden, wobei für den Benutzer im voraus nicht feststellbar ist, wieviele Unterseiten die aktuelle Mehrfachseite aufweisen wird.

Der Erfindung liegt die Aufgabe zugrunde, einen Videotextdecoder der eingangs genannten Art derart auszugestalten, daß die Auswahl bestimmter Videotextseiten für den Benutzer noch weiter vereinfacht wird und daß hierzu im Videotextdecoder kein höherer Speicheraufwand erforderlich ist.

Diese Aufgabe wird erfindungsgemäß durch einen Videotextdecoder mit den kennzeichnenden Merkmalen des Patentanspruchs 1 gelöst.

Der erfindungsgemäße Videotextdecoder weist den Vorteil auf, daß durch die Markierung dem Benutzer eine einfache und sichere Auswahl von Videotextseiten geboten wird. Der Zuschauer kann auf überraschend einfache Art und Weise in den Tafeln der Übersichtsseiten die angebotene Information abrufen, ohne daß hierzu die ebenfalls dargestellte Videotextseitennummer vom Benutzer einzugeben ist.

Bei der Programmierung eines Empfängers, insbesondere eines Videorecorders, ist es bekannt (z.B. DE-PS 33 35 082 oder EP-A1-0 191 149), mit Hilfe einer Markierung, welche in die auf dem Bildschirm eines Fernsehempfängers gezeigte Programmtafel einblendbar ist eine Auswahl der zu programmierenden Sendung vorzunehmen. Beim erfindungsgemäßen Videotextdecoder werden diese im Empfänger bereits vorhandenen Einrichtungen dazu genutzt, um aus einem breiten Angebot an Informationen das Neueste aus Politik, Wirtschaft, Kultur und Sport abzurufen, ohne daß im erfindungsgemäßen Videotextdecoder ein zusätzlicher Speicheraufwand erforderlich ist.

Bei der Ausführungsform des Videotextdecoders nach Patentanspruch 2 kann die Einblendung einer zusätzlichen Markierung vor den Schriftzeilen und deren Verschiebung durch den Benutzer entfallen. Dies ist ansich aus der DE-PS 33 37 204 bekannt, wobei dort eine direkte Auswahl zum Programmieren eines Empfängers auf Empfang und/oder Aufzeichnung bestimmter Sendungen vorgenommen wird. Bei der Ausführungsform nach Patentanspruch 3 kann der Benutzer den Zeitraum entsprechend anpassen.

Die Ausführungsform des Videotextdecoders nach Patentanspruch 4 weist den Vorteil auf, daß durch die automatische Darstellung der Hauptübersichtsseite, dem Benutzer die Orientierung im breiten Angebot an Informationen des Videotext-Programms erleichtert wird und der Benutzer im voraus bereits die gewünschten Themenbereiche auswählen kann, ohne daß im Laufe der Abarbeitung wieder ein Zurückkehren in die Hauptübersichtsseite erforderlich wäre.

Die Ausführungsform des Videotextdecoders nach Patentanspruch 5 weist den Vorteil auf, daß der Speicheraufwand im Videotextdecoder verhältnismäßig gering sein kann, ohne daß der Benutzer sich sequentiell durch das breite Angebot an Informationen vortasten muß oder daß dem Benutzer zum Aufruf der gewünschten Videotextseite die Videotextseitennummer bekannt sein muß.

Die Ausführungsform des Videotextdecoders gemäß Patentanspruch 6 weist den Vorteil auf, daß durch die selbstlernende Speicherung gewünschter Suchinformationen der Speicheraufwand besonders gering ist.

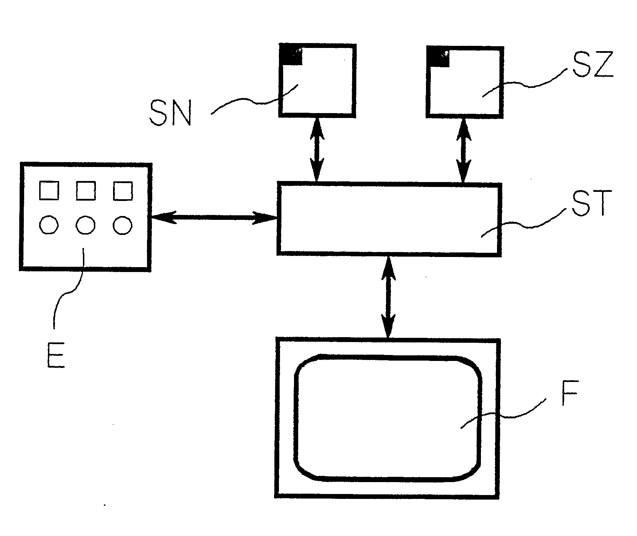

Die Erfindung wird im folgenden anhand einer in der Zeichnung dargstellten Ausführungsform näher beschrieben und erläutert.

Der in der Zeichnung dargestellte Videotextdecoder enthält unter anderem einen Videotextseitennummern-Zwischenspeicher SN und einen Videotextseiten-Zwischenspeicher SZ, welche mit einer Steuerschaltung ST verbunden sind. Die Steuerschaltung ST wählt automatisch die Hauptübersichtsseite aus, welche auf dem Bildschirm eines Fernsehempfängers F sichtbar dargestellt wird.

Mittels einer Eingabeeinrichtung E kann der Benutzer die gewünschte Information auswählen, indem er eine Markierung an die entsprechende Schriftzeile verschiebt oder es wird durch die Steuerschaltung ST des Videotextdecoders diese Schriftzeile erkennbar verändert und dann den Befehl zur Speicherung auslöst. Der Benutzer trifft also die Auswahl anhand des Textes der auf dem Bildschirm des Fernsehempfängers F dargestellten Tafel und für den Abruf der gewünschten Information ist es dann nicht mehr erforderlich, daß ihm die entsprechende Videotextseitennummer bekannt ist. Diese Aufgabe wird von der Steuerschaltung ST des Videotextdecoders übernommen, indem diese, beim Auslösen des Befehls zur Speicherung durch den Benutzer, die entsprechende Videotext- seitennummer im Videotextseitennummern-Zwis- chenspeicher SN einliest. Ist dieser Zwischenspeicher SN bis zum maximalen Füllungsgrad aufgefüllt oder hat der Benutzer die Auswahl abgeschlossen und will die gewünschten Videotextseiten aufrufen, so vergleicht die Steuerschaltung ST die Videotextseitennummern des Wiederholungszykluses mit den im Videotextseitennummern-Zwi- schenspeicher SN gespeicherten Videotextseiten- nummern und die gewünschte Videotextseite wird dann im Videotextseiten-Zwischenspeicher SZ eingelesen. In der Reihenfolge der Eingabe gewünschter Videoseiten durch den Benutzer (bzw. durch die Steuerschaltung ST) werden dann nach- einander die gewünschten Videotextseiten darge- stellt, wobei stets bis zum maximalen Füllungsgrad des Videotextseitennummern-Zwischenspeichers SN das Umfeld einer Gruppe bzw. eines Blocks eingelesen wird.

· Beim erfindungsgemäßen Videotextdecoder werden einerseits die verschiedenen Speicher optimal genutzt und wird andererseits eine bedienungsgerechte Führung des Benutzers durch ein breites Angebot an Informationen ermöglicht. Der erfindungsgemäße Videotextdecoder ist auch dann einsetzbar, wenn die Videotextseiten nach Themenbereichen geordnet sind und ermöglicht durch die automatische, selbstlernende Speicherung dem Benutzer eine einfache, sichere und schnelle Anwahl von Videotextseiten.

## Ansprüche

1. Videotextdecoder mit einem Videotextseiten- Zwischenspeicher (SZ), mit einem Videotextseitennummern-Zwischenspeicher (SN), mit einer Eingabeeinrichtung (E) und mit einer Steuerschaltung (ST), welche die Auswertung der Seitennummern aller im Wiederholungszyklus vorhandener Videotextseiten und vom Benutzer eingegebenen Befehle sowie die Speichersteuerung vor- nimmt, **dadurchgekennzeichnet**, daß der Benut- zer mit der Eingabeeinrichtung (E) eine direkte Auswahl durch Markieren der listenmäßig in Übersichtsseiten zusammengefaßten Videotextseiten vornimmt und daß die Steuerschaltung (ST) die der Markierung entsprechenden Videotextseitennum- mern in den Videotextseitennummern-Zwischen- speicher (SN) einliest.

2. Videotextdecoder nach Anspruch 1, **dadurch gekennzeichnet**, daß die Steuerschaltung (ST) die in den Übersichtsseiten angegebenen Schriftzeilen zeitlich nacheinander für einen bestimmten Zeitraum erkennbar verändert und daß die Steuerschaltung (ST) die entsprechenden Videotextseitennummern in den Videotextseitennummern-Zwischenspeicher (SN) einliest, wenn der Benutzer während dieses Zeitraumes den Befehl zur Speicherung manuell eingibt.

3. Videotextdecoder nach Anspruch 2, **dadurch gekennzeichnet**, daß der Zeitraum für die Dauer der Markierung durch den Benutzer einstellbar ist.

4. Videotextdecoder nach Anspruch 1 oder 2, **dadurch gekennzeichnet**, daß zu Beginn die Steuerschaltung (ST) automatisch die Hauptübersichtsseite auswählt und der Benutzer direkt eine Auswahl zwischen den in der Hauptüberssichtseite enthaltenen Blöcke und/oder Gruppen durch Markieren oder durch Auslösen des Befehls zur Speicherung der erkennbar veränderten Schriftzeilen vornimmt.

5. Videotextdecoder nach einem oder mehreren der Ansprüche 1 - 4, **dadurch gekennzeichnet**, daß die Steuerschaltung (ST) die der Markierung oder den erkennbar veränderten Schriftzeilen entsprechenden Seitennummern der Blöcke und/oder Gruppen in den Videotextseitennummern- Zwischenspeicher (SN) derart einliest, daß zuerst der Videotextseitennummern-Zwischenspeicher (SN) mit dem zum gewählten breiten Suchbegriff zugehörigen Block und dann mit den zum gewählten engeren Suchbegriff zugehörigen Gruppen aufgefüllt wird.

6. Videotextdecoder nach einem oder mehreren der Ansprüche 1 bis 5, **dadurch gekennzeichnet**, daß die Steuerschaltung (ST) anhand der aktuellen Blocknummer den Videotextseitennummern-Zwischenspeicher (SN) mit den zugehörigen Gruppennummern bis zum maximalen Füllungsgrad auffüllt, daß die Steuerschaltung (ST) sequentiell die Blöcke abarbeitet und daß die Steuerschaltung (ST) nach Auslesen der gewünschten Videotextseite die zugehörige Videotextseitennummer im Videotextseitennummern- Zwischenspeicher (SN) löscht oder durch die im Wiederholungszyklus nachfolgende Videotextsei- tennummer überschreibt.

SN

SZ

ST

E

F